# FASCICULE DE BREVET EUROPEEN

(11) **EP 1 923 659 B1**
(45) Date de publication et mention de la délivrance du brevet: **29.09.2010**
(21) Numéro de dépôt: 07119749.5
(22) Date de dépôt: 31.10.2007
(51) Int. Cl.: F42B 39/14, F42D 5/04

(54) **Système de protection pour dispositif contenant une matière réagissant violemment à un échauffement**
Schutzsystem für eine Vorrichtung, die eine Substanz enthält, die heftig auf Erhitzung reagiert
Protection system for a device containing a material reacting violently to heat

(30) Priorité: 14.11.2006 FR 0609935
(43) Date de publication de la demande: 21.05.2008
(73) Titulaire: ROXEL France, 33160 Saint Médard en Jalles (FR)
(72) Inventeur: Bonhomme, Laurent, 45100 ORLEANS (FR); Zanelli, Didier, 45100 ORLEANS (FR)
(74) Mandataire: Esselin, Sophie

(56) Documents cités:
- EP-A- 1 170 568
- FR-A- 2 339 463
- FR-A1- 2 608 265
- GB-A- 1 213 138
- US-A- 5 129 326

## Description

Le domaine de l'invention est celui des systèmes de protection de dispositifs contenant une matière réagissant violemment à un échauffement. De manière générale, le système de protection peut concerner tout dispositif contenant une substance pyrotechnique. Il peut s'agir de moteur fusée, avec ou sans tuyère, de statoréacteur, de tête militaire, à éclats, à effet de souffle..., de missile..., ou de dispositifs pyrotechniques ou non pouvant être utilisés également dans des applications civiles (réservoir GPL, citerne...).

La substance pyrotechnique peut être un propergol, un semi-propergol, un explosif secondaire...

Dans ces différentes applications, il est fortement recherché de maîtriser en toute circonstance la réaction des substances qui sont contenues dans le réservoir ainsi que les effets de la réaction du dispositif sur l'environnement.

Selon l'art connu, le propulseur peut être couplé à un senseur capable lorsqu'il détecte un incendie par exemple, ou une élévation de température inopinée, de déclencher une action et par la même de mettre hors d'état d'explosion violente le propulseur. Il est ainsi connu de coupler le propulseur à un cordeau découpeur capable de générer la découpe du propulseur en différents endroits pour permettre une série de fuites de gaz de décomposition ou de combustion avant qu'une réaction violente ne puisse se produire.

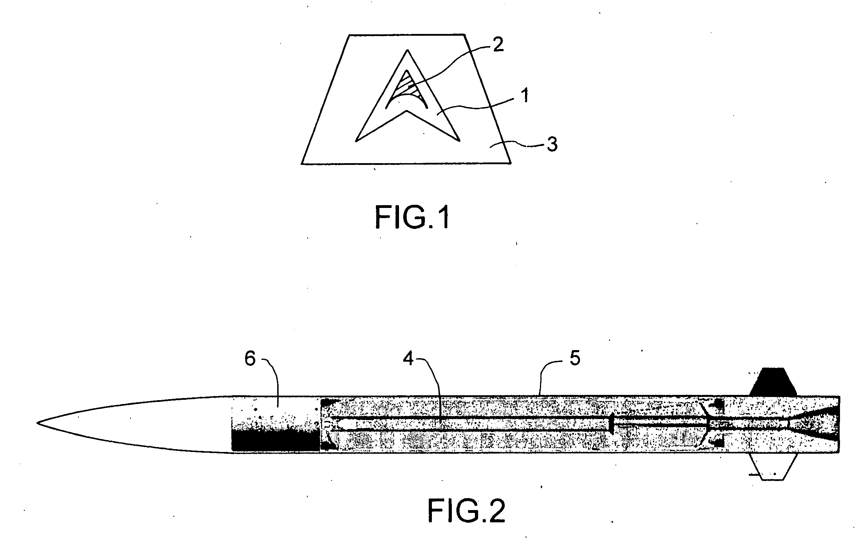

De manière connue, le cordeau découpeur est constitué comme illustré en figure 1, d'une âme métallique 1, contenant une substance 2 susceptible de détoner pour provoquer la découpe du propulseur, l'ensemble étant mis dans une structure isolante 3.

La figure 2 illustre un exemple de missile équipé d'un propulseur 4, d'un cordeau découpeur 5, d'une charge focalisée 6.

Le cordeau découpeur est relié à un senseur (non représenté) capable en cas d'échauffement intempestif d'activer ledit cordeau de manière à déclencher la détonation de la substance 2, entraînant ainsi la découpe de la structure du propulseur en liaison avec celle du cordeau.

Un inconvénient de ce type de système de protection de propulseur réside dans la proximité de la substance explosive au niveau du cordeau, très proche du propulseur ainsi que dans l'élément isolant qui y est associé qui constitue un encombrement important.

Il est notamment connu du document EP-A-1 170 568, un système avec des profilés contenant des explosifs solides afin de découper la structure d'un propulseur ou d'une munition explosive.

Un inconvénient de ce type de système de protection de propulseur réside dans la nécessité de protéger le cordeau découpeur et principalement sa substance explosive des environnements normaux rencontrés dans la vie opérationnelle du missile au moyen d'une protection volumineuse.

Pour résoudre le problème de sécurité précité et notamment de sécurité embarquée, la présente invention propose un nouveau système dans lequel la substance explosive n'est pas maintenue en permanence dans l'âme du cordeau découpeur appelée profilé, mais est avantageusement amenée au niveau dudit profilé uniquement en cas de demande.

Plus précisément l'invention a pour objet un système de protection pour dispositif contenant une matière réagissant violemment à un échauffement, le système comportant un profilé capable de générer la découpe du dispositif et un senseur permettant d'activer ledit profilé, caractérisé en ce que le système comprend un réservoir principal contenant une substance susceptible de détoner, au moins un premier conduit permettant d'alimenter, le profilé avec ladite substance, et au moins une ligne de transmission de commande reliant le senseur audit profilé pour l'activer.

Selon une variante de l'invention, le système de protection comprend des moyens pour actionner l'alimentation dudit profilé en substance explosive.

Selon une variante de l'invention, le système de protection comporte en outre des moyens d'inhibition de l'activation d'alimentation en substance explosive au niveau du profilé.

Ces moyens peuvent comprendre un conduit secondaire et une valve de commande reliés au premier conduit d'alimentation.

Ces moyens peuvent être connectés en amont au niveau dudit senseur.

Selon une variante de l'invention, le système de protection comprend un premier réservoir inerte comprenant une première substance inerte et un second réservoir comprenant une seconde substance inerte, le mélange des première et seconde substances étant susceptible d'exploser, et des moyens de mise en contact desdites substances dans le réservoir principal.

Selon une variante de l'invention, le système de protection comprend un premier réservoir inerte comprenant une première substance inerte et un second réservoir comprenant une seconde substance inerte, le mélange des première et seconde substances formant un mélange explosible, et des moyens de mise en contact desdites substances dans le profilé.

Selon une variante de l'invention, une des substances inertes est une mousse ou poudre susceptible d'être imbibée d'une substance liquide inerte rendant le mélange explosible.

Selon une variante de l'invention, l'une des substances inertes est une mousse susceptible d'être remplie d'une substance explosive.

L'invention sera mieux comprise et d'autres avantages apparaîtront à la lecture de la description qui va suivre et grâce aux figures annexées parmi lesquelles :
- la figure 1 illustre un système de protection d'un propulseur selon l'art connu ;
- la figure 2 illustre un missile équipé d'un cordeau découpeur selon l'art connu ;
- la figure 3 illustre un premier exemple de système de protection selon l'invention, comportant un réservoir non pressurisé ;
- la figure 4 illustre un second exemple de système de protection selon l'invention comportant un réservoir pressurisé.

De manière générale, le système de protection de l'invention comprend un réservoir contenant une substance susceptible d'exploser sous l'effet de la chaleur. Ce réservoir est connecté à un senseur qui lorsqu'il détecte une élévation de température considérée comme anormale, active un dispositif pyrotechnique qui va découper la structure du propulseur, en différents endroits de manière à engendrer des orifices par lesquels les gaz de décomposition ou de combustion peuvent s'échapper. Selon l'invention, le profilé ne comprend pas de manière permanente la substance explosive, mais est rempli de ladite substance uniquement lorsque le senseur a au préalable détecté une menace de température permettant de conférer au système de protection une meilleure sécurité. Ainsi le système de protection de l'invention fonctionne selon les étapes suivantes :
- détection d'une élévation de température intempestive ;
- déclenchement de l'alimentation du profilé en substance explosive ;
- commande de la détonation au niveau du profilé pour provoquer la découpe ou l'affaiblissement de la structure du propulseur et l'échappement des gaz de décomposition ou de combustion.

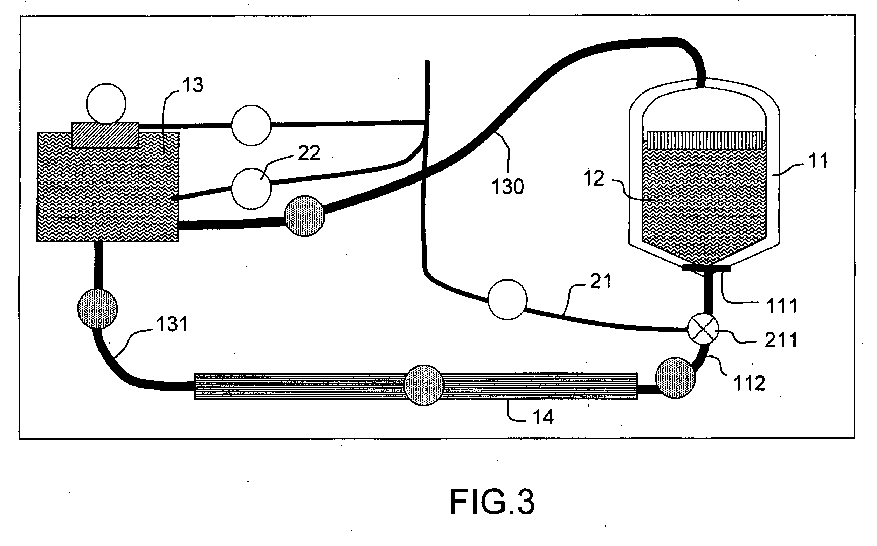

La figure 3 illustre une première variante de l'invention comportant un réservoir 11 non pressurisé contenant une substance 12, un senseur 13 et un profilé 14.

Le senseur est relié au réservoir par des moyens 130 permettant de mettre sous pression ledit réservoir équipé de moyens de fermeture 111. Lorsque le réservoir est mis sous pression, les moyens de fermeture cèdent de manière à répandre via un conduit 112, la substance 12 dans le profilé. Le senseur est également connecté au profilé par une ligne de transmission de commande 131 permettant de déclencher la détonation de la substance 12 introduite préalablement dans le profilé.

Avantageusement, le système de protection peut comprendre un circuit secondaire d'inhibition qui le neutralise. Ceci peut être notamment intéressant lorsque le propulseur est sur le point de rentrer dans une phase active durant laquelle on veut éviter tout événement intempestif pouvant par exemple interférer sa mission. Ce circuit secondaire peut comprendre dans ce cas comme illustré en figure 3, une vanne 211 et son circuit de commande 21 et, empêchant la substance explosive d'alimenter le profilé, même si le senseur ayant détecté un échauffement déclenche la mise sous pression du réservoir 12 et donc la rupture des moyens de fermeture 111. Le circuit secondaire peut également comprendre en alternative ou en complément des moyens 22 d'inhibition du senseur, et des moyens 23 permettant d'annuler la commande de la détonation au niveau du profilé.

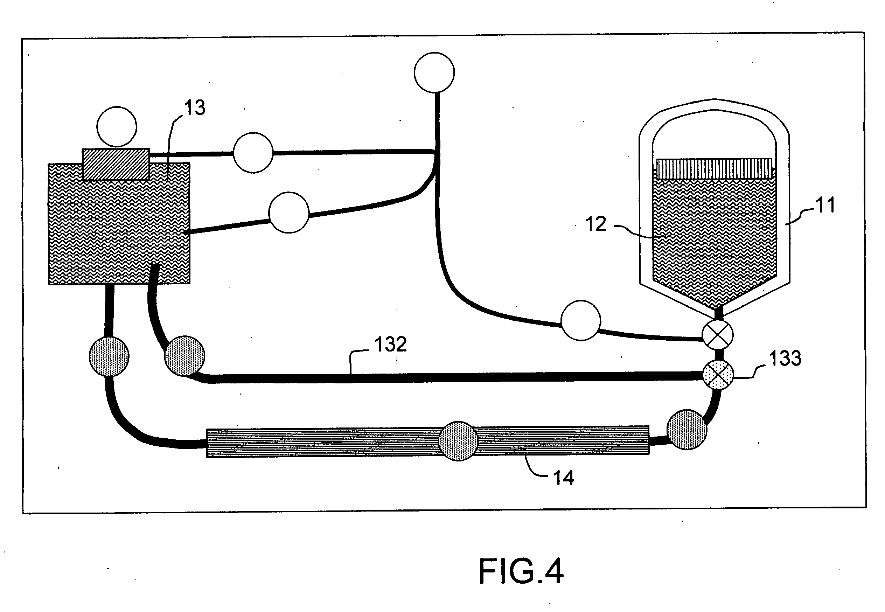

La figure 4 illustre une seconde variante de l'invention dans laquelle, le réservoir est maintenu sous pression.

Selon cette configuration, une simple commande du senseur permet de déclencher via la ligne de transmission 132, l'ouverture d'une vanne 133, permettant d'alimenter le profilé en substance explosive. Selon cette variante, et ce de manière similaire à celle représentée en figure 3, le système de protection peut comprendre un circuit secondaire d'inhibition.

Selon une autre variante de l'invention, la protection du système peut être renforcée en utilisant non plus une substance explosive mais un mélange explosif, c'est à dire l'utilisation de deux substances qui indépendamment l'une de l'autre sont inertes mais qui mises ensemble conduisent à un mélange explosif. Selon cette variante, le profilé peut comprendre en permanence une première substance inerte, le réservoir comprend une seconde substance inerte, seul le mélange formé lorsque le profilé est alimenté avec la seconde substance est explosif. L'intérêt de cette alternative réside dans le non transport permanent d'une substance explosive.

De manière générale, la substance explosive peut être liquide ou avantageusement gélifiée de manière à mieux pallier des éventuels problèmes de microfuites.

Lorsqu'il s'agit d'un bi-composant, l'un au moins est liquide ou gélifié, l'autre sous forme de poudre, mousse, etc. Il peut s'agir par exemple de billes de verre, de poudre de silice, de borosilicate,...

La substance explosive peut être également, seule ou en mélange, du nitrométhane, de la nitroglycérine, du peroxyde d'hydrogène, du kérosène, de l'acide perchlorique, de l'éthanol, ...

Selon l'invention, la substance explosive ou le/les composant(s) liquide(s) sont introduits dans la partie fonctionnelle réalisant la découpe juste avant l'initiation si bien que la partie fonctionnelle est inerte dans sa vie opérationnelle.

La partie fonctionnelle du profilé réalisant la découpe a un profil de charge creuse, de charge creuse linéaire ou est un simple tube.

La partie fonctionnelle réalisant la découpe est ainsi rendue selon l'invention, insensible aux environnements normaux du dispositif à protéger puisqu'elle est inerte.

Une fois alimentée, la partie fonctionnelle réalisant la découpe peut produire une découpe totale ou partielle ou un affaiblissement de la structure contenant la substance pyrotechnique.

Le système de protection comprend un ou plusieurs senseurs qui détectent l'agression d'échauffement. Différents types de senseurs peuvent être utilisés dans le système de protection de l'invention.

Le senseur peut comprendre une substance pyrotechnique dont la température d'auto-initiation est connue (Propergol, propergol composite ou homogène, poudre noire, composition d'allumage BKN03, PAL,...).

Le senseur peut être un eutectique, une brasure, une soudure froide, un matériau à mémoire de forme.

Le senseur peut être un thermocouple avec ses unités de d'alimentation (batteries, diode photoélectrique) et de traitement de l'information.

Plusieurs senseurs peuvent être utilisés pour commander l'injection de l'explosif ou du mélange explosif.

Le réservoir contenant l'explosif liquide (ou le/les composant(s) liquide(s)) peut être une bouteille et ne pas être pressurisé en stockage minimisant ainsi les risques de fuite. Dans cette configuration, la bouteille contenant l'explosif liquide est pressurisée juste avant l'injection sur commande d'un ou plusieurs senseurs.

L'injection de l'explosif liquide (ou de son ou ses composants liquides) en quantité suffisante autorise l'initiation en détonation (amélioration de la fiabilité du système).

## Revendications

1. Système de protection pour dispositif contenant une matière réagissant violemment à un échauffement, le système comportant un profilé (14) capable de générer la découpe du dispositif et un senseur (13) permettant d'activer ledit profilé (14), **caractérisé en ce que** le système comprend un réservoir principal (11) contenant une substance (12) susceptible de détoner, au moins un premier conduit (112) permettant d'alimenter le profilé (14) avec ladite substance (12), et au moins une ligne de transmission de commande (131) reliant le senseur (13) audit profilé (14) pour l'activer.

2. Système de protection selon l'une des revendication 1, **caractérisé en ce qu'**il comprend des moyens pour actionner l'alimentation dudit profilé (14) en substance (12) susceptible d'exploser.

3. Système de protection selon l'une des revendications 1 ou 2; **caractérisé en ce que** le réservoir principal (11) est sous pression.

4. Système de protection selon l'une des revendications 1 ou 2, **caractérisé en ce que** le réservoir principal (11) comprend une substance (12) susceptible d'exploser non pressurisée et qu'il comprend des moyens d'injection dans le profilé de ladite substance.

5. Système de protection selon la revendication 4, **caractérisé en ce que** les moyens d'injection dans le profilé (14) de ladite substance (12) susceptible d'exploser comprennent des moyens (130) de mise sous pression de ladite substance (12) dans le réservoir principal (11) et **en ce que** le senseur (13) comporte des moyens de commande desdits moyens (130) de mise sous pression.

6. Système de protection selon l'une des revendications 1 à 5, **caractérisé en ce qu'**il comporte en outre des moyens d'inhibition de l'activation d'alimentation en substance (12) susceptible d'exploser au niveau du profilé (14).

7. Système de protection selon la revendication 6, **caractérisé en ce que** les moyens d'inhibition comprennent un conduit secondaire (21) et une valve de commande (211) reliées au premier conduit d'alimentation.

8. Système de protection selon la revendication 6, **caractérisé en ce que** les moyens d'inhibition sont connectés en amont au niveau dudit senseur (13).

9. Système de protection selon l'une des revendications 1 à 8, **caractérisé en ce qu'**il comprend un premier réservoir inerte comprenant une première substance inerte et un second réservoir comprenant une seconde substance inerte, le mélange des première et seconde substances étant susceptible d'exploser, et des moyens de mise en contact desdites substances dans le réservoir principal.

10. Système de protection selon l'une des revendications 1 à 8, **caractérisé en ce** le premier ou le second réservoir est le réservoir principal contenant une des substances inertes.

11. Système de protection selon l'une des revendications 9 ou 10, **caractérisé en ce que** l'une des substances inertes est une mousse susceptible d'être remplie d'une substance explosive.

## Claims

1. A protection system for a device containing a material reacting violently to heating, the system including a section (14) causing the device to be cut off and a sensor (13) allowing activation of said section (14), **characterised in that** the system includes a main reservoir (11) containing a substance (12) susceptible to detonation, at least one first pipe (112) allowing the section (14) to be supplied with said substance (12) and at least one control transmission line (131) connecting the sensor (13) to said section (14) for activation thereof.

2. The protection system according to claim 1, **characterised in that** it includes means for activating the supply of said section (14) with the substance (12) susceptible to explosion.

3. The protection system according to any one of claims 1 to 2, **characterised in that** the main reservoir (11) is pressurised.

4. The protection system according to any one of claims 1 to 2, **characterised in that** the main reservoir (11) includes a non-pressurised substance (12) susceptible to explosion and **in that** it includes means for injecting said substance into said section.

5. The protection system according to claim 4, **characterised in that** the means for injecting said substance (12) susceptible to explosion in the section (14) includes means (130) of pressurising said substance (12) in the main reservoir (11) and **in that** the sensor (13) includes means for controlling said pressurisation means (130).

6. The protection system according to any one of claims 1 to 5, **characterised in that** it further comprises means for inhibiting activation of the supply of the section (14) with the substance (12) susceptible to explosion.

7. The protection system according to claim 6, **characterised in that** the inhibition means include a secondary pipe (21) and a control valve (211) connected to the first supply pipe.

8. The protection system according to claim 6, **characterised in that** the inhibition means are connected upstream in the vicinity of said sensor (13).

9. The protection system according to any one of claims 1 to 8, **characterised in that** it includes a first inert reservoir including a first inert substance and a second reservoir including a second inert substance, the mixture of the first and second substances tending to explode, and means for contacting said substances in the main reservoir.

10. The protection system according to any one of claims 1 to 8, **characterised in that** the first or the second reservoir is the main reservoir containing one of the inert substances.

11. The protection system according to any one of claims 9 to 10, **characterised in that** one of the inert substances is a foam tending to be filled with an explosive substance.

## Patentansprüche

1. Schutzsystem für eine Vorrichtung, die ein Material enthält, das heftig auf Erhitzung reagiert, wobei das System ein Profil (14), das die Vorrichtung abtrennen kann, und einen Sensor (13) beinhaltet, der eine Aktivierung des Profils (14) zulässt, **dadurch gekennzeichnet, dass** das System ein eine explosionsfähige Substanz (12) enthaltendes Hauptreservoir (11), wenigstens eine erste Rohrleitung (112), über die das Profil (14) mit der Substanz (12) gespeist werden kann, und wenigstens eine Befehlsübertragungsleitung (131) beinhaltet, die den Sensor (13) mit dem Profil (14) für dessen Aktivierung verbindet.

2. Schutzsystem nach Anspruch 1, **dadurch gekennzeichnet, dass** es Mittel zum Starten des Speisens des Profils (14) mit der explosionsfähigen Substanz (12) umfasst.

3. Schutzsystem nach einem der Ansprüche 1 oder 2, **dadurch gekennzeichnet, dass** das Hauptreservoir (11) unter Druck steht.

4. Schutzsystem nach einem der Ansprüche 1 oder 2, **dadurch gekennzeichnet, dass** das Hauptreservoir (11) eine nicht unter Druck stehende explosionsfähige Substanz (12) enthält, und dass es Mittel zum Injizieren der Substanz in das Profil umfasst.

5. Schutzsystem nach Anspruch 4, **dadurch gekennzeichnet, dass** die Mittel zum Injizieren der explosionsfähigen Substanz (12) in das Profil (14) Mittel (130) zum Unterdrucksetzen der Substanz (12) im Hauptreservoir (11) umfassen, und dadurch, dass der Sensor (13) Mittel zum Steuern der Unterdrucksetzungsmittel (130) hat.

6. Schutzsystem nach einem der Ansprüche 1 bis 5, **dadurch gekennzeichnet, dass** es ferner Mittel zum Verhindern der Aktivierung des Speisens mit der explosionsfähigen Substanz (12) nahe dem Profil (14) umfasst.

7. Schutzsystem nach Anspruch 6, **dadurch gekennzeichnet, dass** die Verhinderungsmittel eine sekundäre Rohrleitung (21) und ein Steuerventil (211) umfassen, die mit der ersten Speiserohrleitung verbunden sind.

8. Schutzsystem nach Anspruch 6, **dadurch gekennzeichnet, dass** die Verhinderungsmittel oberhalb des Sensors (13) in der Nähe davon angeschlossen sind.

9. Schutzsystem nach einem der Ansprüche 1 bis 8, **dadurch gekennzeichnet, dass** es ein erstes inertes Reservoir mit einer ersten inerten Substanz und ein zweites Reservoir mit einer zweiten inerten Substanz umfasst, wobei das Gemisch aus der ersten und der zweiten Substanz explosionsfähig ist, und Mittel umfasst, um die Substanzen in dem Hauptreservoir miteinander in Kontakt zu bringen.

10. Schutzsystem nach einem der Ansprüche 1 bis 8, **dadurch gekennzeichnet, dass** das erste oder das zweite Reservoir das Hauptreservoir ist, das eine der inerten Substanzen enthält.

11. Schutzsystem nach einem der Ansprüche 9 oder 10, **dadurch gekennzeichnet, dass** eine der inerten Substanzen ein Schaumstoff ist, der mit einer explosiven Substanz gefüllt werden kann.
